# EUROPEAN PATENT SPECIFICATION

(11) **EP 1 676 043 B1**
(45) Date of publication and mention of the grant of the patent: **19.09.2007**
(21) Application number: 04795771.7
(22) Date of filing: 20.10.2004
(51) Int. Cl.: F16D 41/08

(54) **CLUTCHING DEVICE**
KUPPLUNGSVORRICHTUNG
DISPOSITIF D'EMBRAYAGE

(30) Priority: 20.10.2003 US 512714 P
(43) Date of publication of application: 05.07.2006
(73) Proprietor: Timken US Corporation, Torrington, CT 06790 (US)
(72) Inventor: JOKI, Mark, A., Dover, OH 44622 (US)
(74) Representative: Lehmann, Alexander
(86) International application number: PCT/US2004/034656
(87) International publication number: WO 2005/042998

(56) References cited:
- US-A- 5 005 683
- US-A1- 2002 104 397
- US-A1- 2002 155 914

## Description

### Background

The present invention relates to clutching devices. More particularly, the present invention relates to a clutching device for selectively coupling a gear to a shaft.

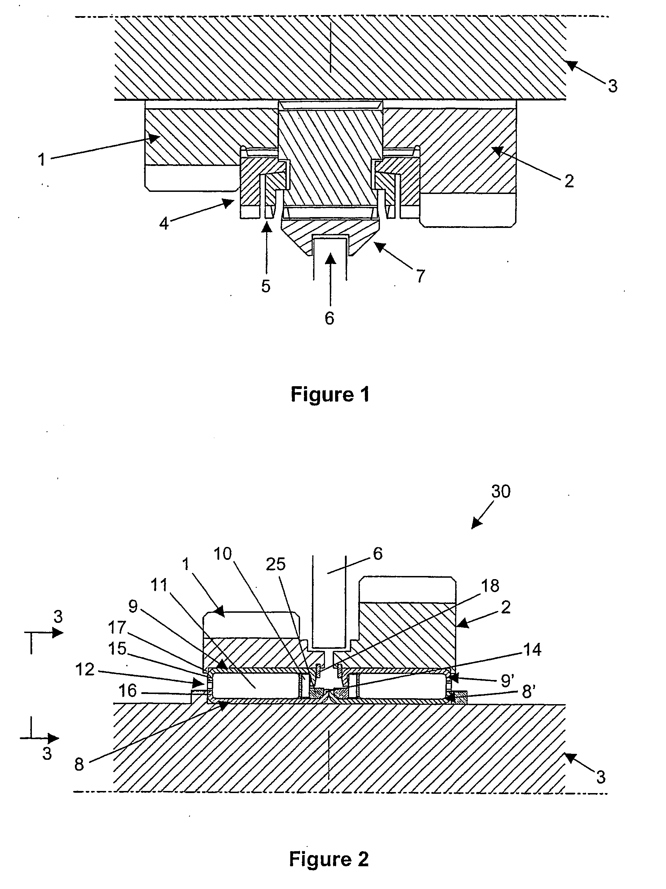

Referring to Fig. 1, a prior art clutching device for clutching a small gear 1 or a larger gear 2 to a shaft 3 upon which the gears 1, 2 are rotatably mounted is shown. To couple the shaft 3 to the small gear 1, which is rotating at a different speed than the shaft 3, a shift fork 6 is moved towards the small gear 1. The shift fork 6 pushes against ring 7 which is rotationally fixed to shaft 3, but axially moveable. The inner teeth edge of ring 7 contact and drive outer cone member 5 which in turn, contacts and applies rotational torque to the inner cone member 4 which is rotationally fixed to the small gear 1. The profile on the edge of inner teeth of ring 7 and the edge of outer teeth on outer cone member 5 block further axial movement of ring 7 while accelerating torque is being transferred from ring 7 to outer cone member 5. When the small gear 1 is approximately the same speed as the shaft 3, there is no longer significant accelerating torque transmitted and the ring 7 is no longer axially blocked by the outer cone member 4, allowing it to axially move to engage the outer teeth of inner cone member 4 which rotationally fixes the small gear 1 to the shaft 3. The larger gear 2 is coupled to the shaft 3 in a similar manner by moving the shift fork 6 toward the larger gear 2.

US Patent No. 6,409,001 discloses a clutching device that can selectively couple a gear to a shaft. This device requires a number of parts that are needed to engage and disengage the clutch.

### Summary

The present invention provides a clutching device comprising a generally cylindrical tubular slipper having a friction surface, a bearing surface and a first interlocking member. The bearing surface has radial projections which form axially oriented recesses. A generally cylindrical coupling member has a mounting surface, a bearing surface and a second interlocking member. The bearing surface has radial projections which form axially oriented recesses such that the tubular slipper recesses and the coupling member recesses form pockets in which said rollers are located. The tubular slipper and coupling member are axially displaceable relative to one another between a first position wherein the first and second interlocking members are engaged such that the coupling member and tubular slipper recesses are maintained in alignment and a second position wherein the first and second interlocking members are disengaged and the coupling member and the tubular slipper are free to rotate relative to one another such that the coupling member and tubular slipper recesses are misalignable. The present invention provides a novel actuation method that requires no ancillary parts for actuation. This invention replaces a cone type synchronizer device with a lower cost and narrower device.

### Brief Description of the Drawings

Fig. 1 is a longitudinal sectional view of a gear pair with a cone synchronizer mounted on a shaft as in a manual transmission.
Fig. 2 is a longitudinal sectional view of a gear pair with a clutching device of the present invention mounted on a shaft as in a manual transmission.
Fig. 3 is a fragmentary end view of the gear, synchronizers, and shaft taken along line 3-3 of Fig. 2 with the synchronizer being disengaged.

### Description of the Preferred Embodiments

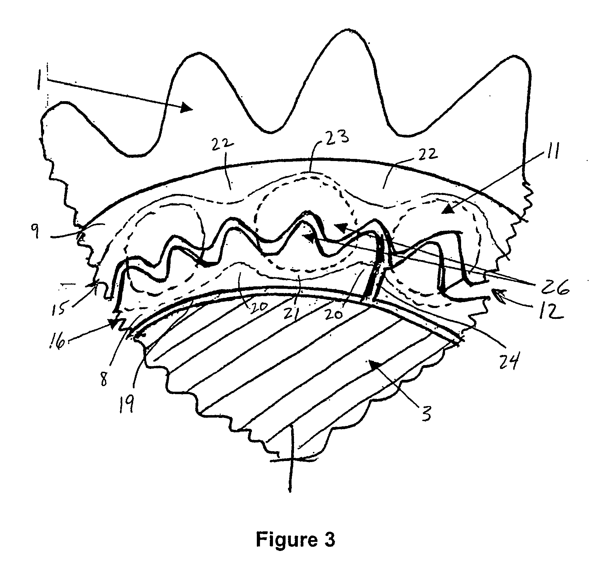

Referring to Figs. 2 and 3, a clutching device 30 that is a first embodiment of the present invention will be described. The clutching device 30 includes a tubular slipper 8 loosely fit over shaft 3. The inner periphery of the tubular slipper 8 forms a cylindrical frictional surface 19. The outer periphery of the tubular slipper 8 has a bearing surface with radial projections 20 forming a series of axial recesses 21 as described in US 6,409,001. The tubular slipper 8 is not fully circular but has an axial gap 24 to facilitate radial contraction (see Fig. 3).

A coupling member 9 has a cylindrical outer periphery press-fit into the small gear 1. The coupling member 9 is preferably retained axially with respect to the small gear 1 by a shoulder 17 formed on the small gear 1 and a snap ring 18 retained by the small gear 1. Other means may also be utilized to axially retain the coupling member 9 with respect to the small gear 1. The inner cylindrical surface of the coupling member 9 has a bearing surface with radial projections 22 forming a series of axial recesses 23 in a similar pattern to the tubular slipper 8. Rollers 11 are placed in the radial gap formed between the tubular slipper 8 and the coupling member 9 - indeed, in the recesses 21, 23 in the tubular slipper 8 and the coupling member 9.

On one end of both the tubular slipper 8 and the coupling member 9 are formed first radial flanges 15, 16 with a rotationally interlocking feature 12. In the preferred embodiment, the interlocking feature 12 includes a series of internal and external involute splines 26 formed on the radial flanges 15, 16. Other means for interlocking the tubular slipper 8 and coupling member 9 may also be utilized. When the interlocking feature 12 is engaged, the recesses in the tubular slipper 8 and the recesses 23 in the coupling member 9 are substantially radially opposed, creating looseness of the rollers 11 between these two members 8 and 9.

A second radial flange 14 on the tubular slipper 8 traps the rollers 11. A wave spring 10 is positioned between the rollers 11 and a spacer 25 in contact with the flange 14. The wave spring 10 keeps the rollers 11 seated against the first radial flange 16 of the tubular slipper 8. A second radial flange 13 on the coupling member 9 also traps the rollers 11. The wave spring 10 acts between the rollers 11 and the flange 13 of the coupling member 9 to bias the coupling member 9 to the right, as illustrated, thereby maintaining the interlocking feature 12 in an engaged positioned. In this condition, the tubular slipper 8 is loose on the shaft 3 and very little torque transfers between the small gear 1 and the shaft 3.

When driving through the small gear 1 is desired, the shift fork 6 pushes the small gear 1 to the left, causing the coupling member 9 to move with it against the force of the spring 10. The tubular slipper 8 is retained axially, and therefore, the coupling member 9 moves axially relative to the tubular slipper 8, with the coupling member flange 15 moving out of axial alignment with the tubular slipper flange 16. As such, the interlocking feature 12 splines 26 disengage from each other and the coupling member 9 and tubular slipper 8 are rotatable relative to one another. The driven small gear 1 moves relative to the shaft 3 and experiences a slight drag from the contact of the tubular slipper 8 on the shaft 3. The drag torque causes the tubular slipper 8 to move relative to the coupling member 9, causing the rollers 11 to contact the sides of the recesses 21, 23. The contact of the rollers 11 with the recesses 21, 23 causes the tubular slipper 8 to reduce in diameter, which increases the drag torque. The high pressure angle of the contact of the rollers 11 with the sides of recesses 21, 23, causes the tubular slipper 8 to lock on the shaft 3 and power is transferred from the small gear 1 to the shaft 3 by the friction caused by the high normal forces of the tubular slipper 8 on the shaft 3.

The present clutching device 30 has been described with respect the small gear 1. The larger gear 2 is aligned with a second tubular slipper 8' and coupling member 9' and functions in the same manner as previously described. While the present invention is described with respect to a shaft having small and larger gears 1 and 2, the clutching device 30 may be utilized with various shaft and gear assemblies. Additionally, while the present invention has been described with the tubular slipper positioned about the shaft and the coupling member is fixed to the gear, the configuration may be reversed with the coupling member fixed to the shaft and the tubular slipper engaging the gear. In such a configuration, relative rotation between the tubular slipper and the coupling member causes the rollers to engage the side walls of the recesses and thereby expand the tubular slipper which in turn causes the slipper to lock to the gear.

## Claims

1. A clutching device (30) comprising:
a generally cylindrical tubular slipper (8) having a friction surface (19) and a bearing surface with an axial slit (24) extending between the friction surface and a bearing surface, the bearing surface having radial projections (20) which form axially oriented recesses (21), the tubular slipper including a first interlocking member (12, 16), and
a generally cylindrical coupling member (9) having a mounting surface and a bearing surface, the bearing surface having radial projections (22) which form axially oriented recesses such that the tubular slipper recesses and the coupling member recesses (23) form pockets in which rollers (11) are located, the coupling member (9) including a second interlocking member (12, 15), **characterised in that**
the tubular slipper (8) and coupling member (9) are axially displaceable relative to one another such that in a first position the first and second interlocking members (15, 16) are engaged such that the coupling member recesses and the tubular slipper recesses are maintained in circumferential alignment, and in a second position the first and second interlocking members (15, 16) are disengaged such that the coupling member and the tubular slipper are free to rotate relative to one another whereby the coupling member recesses and the tubular slipper recesses are circumferentially misalignable.

2. The device according to claim 1 wherein the first interlocking member (12) is defined on a first radial flange (16) extending from the tubular slipper (8) and the second interlocking member (12) is defined on a first radial flange (15) extending from the coupling member (9).

3. The device according to claim 2 wherein in the first position, the tubular slipper first radial flange (16) is axially aligned with the coupling member first radial flange (15).

4. The device according to claim 3 wherein the tubular slipper has a second radial flange (14) spaced from the tubular slipper (8) first flange and the coupling member (9) has a second radial flange (13) spaced from the coupling member first flange with the rollers positioned between the tubular slipper first and second flanges and between the coupling member first and second flanges, and wherein an axially acting spring (10) is positioned between the rollers and the tubular slipper and coupling member second flanges such that the spring biases the tubular slipper and coupling member first flanges in to axial alignment.

5. The device according to claim 4 wherein the tubular slipper has an axial length greater than an axial length of the coupling member and a spacer (25) is positioned between the tubular slipper second flange and the spring.

6. The device according to claim 2 wherein the first and second interlocking members are defined by a series of internal and external involute splines (26) formed on the tubular slipper and coupling member first flanges (15, 16).

7. The device according to claim 1 wherein in the second position, the coupling member (9) rotates at a different speed than the tubular slipper (8) thereby causing the rollers to move against the projections such that the tubular slipper is contracted.

8. The device according to claim 1 wherein in the second position, the coupling member (9) rotates at a different speed than the tubular slipper (8) thereby causing the roller (11) to move against the projections such that the tubular slipper is expanded.

9. The device according to claim 1 wherein the coupling member (9) is displaced relative to the tubular slipper (8) by a shift fork (6).

10. The device according to claim 1 wherein the tubular slipper (8) is mounted about a shaft and the coupling member is fixed to a first gear rotatable about the shaft.

11. The device according to claim 1 wherein the coupling member can be fixed to a shaft and the tubular slippers can be engaged by a first gear rotatable about the shaft.

12. A device comprising a first gear (1), a shaft (3) and a clutching device (30) for coupling said first gear to said shaft, the clutching device comprising:
a generally cylindrical tubular slipper (8) having a friction surface (19) and a bearing surface with an axial slit (24) extending between the friction surface and a bearing surface, the friction surface (19) engaging either the shaft (3) or the first gear (1) and the bearing surface having radial projections (20) which form axially oriented recesses, the tubular slipper (8) including a first interlocking member (12, 15); and
a generally cylindrical coupling member (9) having a mounting surface and a bearing surface, the mounting surface fixed to the other of the shaft or the first gear and the bearing surface having radial projections (22) which form axially oriented recesses (23) such that the tubular slipper recesses and the coupling member recesses form pockets in which rollers (11) are located, the coupling member (9) including a second interlocking member (12, 16),
**characterised in that** the tubular slipper and coupling member are axially displaceable relative to one another such that in a first position the first and second interlocking members (15, 16) are engaged such that the coupling member recesses and the tubular slipper recesses are maintained in circumferential alignment, and in a second position the first and second interlocking members (15, 16) are disengaged such that the coupling member and the tubular slipper are free to rotate relative to one another whereby the coupling member recesses and the tubular slipper recesses are circumferentially misalignable.

13. The device according to claim 12 wherein the first interlocking member (12) is defined on a first radial flange (16) extending from the tubular slipper (8) and the second interlocking member (12) is defined on a first radial flange (15) extending from the coupling member (9).

14. The device according to claim 13 wherein in the first position, the tubular slipper first radial flange (16) is axially aligned with the coupling member first radial flange (15).

15. The device according to claim 14 wherein the tubular slipper has a second radial flange (14) spaced from the tubular slipper (8) first flange and the coupling member (9) has a second radial flange (13) spaced from the coupling member first flange with the rollers positioned between the tubular slipper first and second flanges and between the coupling member first and second flanges, and wherein an axially acting spring (10) is positioned between the rollers and the tubular slipper and coupling member second flanges such that the spring biases the tubular slipper and coupling member first flanges in to axial alignment.

16. The device according to claim 15 wherein the tubular slipper has an axial length greater than an axial length of the coupling member and a spacer (25) is positioned between the tubular slipper second flange and the spring.

17. The device according to claim 13 wherein the first and second interlocking members are defined by a series of internal and external involute splines (26) formed on the tubular slipper and coupling member first flanges (15, 16).

18. The device according to claim 12 wherein the tubular slipper (8) is positioned about the shaft (3) and when in the second position, the coupling member (9) rotates at a different speed than the tubular slipper (8) thereby causing the rollers (11) to move against the projections such that the tubular slipper is contracted against the shaft.

19. The device according to claim 12 wherein the tubular slipper (8) is engaged with the first gear (1) and when in the second position, the coupling member (9) rotates at a different speed than the tubular slipper (8) thereby causing the rollers to move against the projections such that the tubular slipper is expanded in to locked engagement with the first gear.

20. The device according to claim 12 wherein the coupling member (9) is displaced relative to the tubular slipper (8) by a shift fork (6).

21. The device according to claim 20 further including a second gear (2) positioned about the shaft (3) with a second clutching device, including a second tubular slipper (8') and a second coupling member (9'), therebetween and wherein the shift fork (6) is moveable between a first position wherein neither the first (1) or second (2) gear is engaged, a second position wherein the first gear (1) is engaged and a third position wherein the second gear (2) is engaged.

22. The device according to claim 12 wherein the tubular slipper (8) is mounted about the shaft (3) and the coupling member (9) is fixed to the first gear (1).

23. The device according to claim 12 wherein the coupling member (9) is fixed to the shaft (3) and the tubular flipper (8) is engaged by the first gear (1).

## Patentansprüche

1. Kupplungsvorrichtung (30), mit folgenden Merkmalen:
- einem im Allgemeinen zylindrischen, röhrenförmigen Gleitelement (8) mit einer Reibungsfläche (19) und einer Lagerfläche, mit einem axialen Spalt (24), der sich zwischen der Reibungsfläche und einer Lagerfläche erstreckt, wobei die Lagerfläche radiale Vorsprünge (20) aufweist, die axial ausgerichtete Ausnehmungen (21) bilden, wobei das röhrenförmige Gleitelement ein erstes Verriegelungselement (12, 16) aufweist; und
- einem im Allgemeinen zylindrischen Kopplungselement (9), das eine Befestigungsfläche und eine Lagerfläche aufweist, wobei die Lagerfläche radiale Vorsprünge (22) aufweist, die axial ausgerichtete Ausnehmungen derart bilden, dass die Ausnehmungen des röhrenförmigen Gleitelements und die Ausnehmungen (23) des Kopplungselements Taschen bilden, in denen Wälzkörper (11) angeordnet sind, wobei das Kopplungselement (9) ein zweites Verriegelungselement (12, 15) aufweist;
**dadurch gekennzeichnet, dass**
- das röhrenförmige Gleitelement (8) und das Kopplungselement (9) relativ zueinander derart axial verschiebbar sind, dass in einer ersten Position die ersten und zweiten Verriegelungselemente (15, 16) derart in Eingriff stehen, dass die Ausnehmungen des Kopplungselements und die Ausnehmungen des röhrenförmigen Gleitelements in Umfangsrichtung in Ausrichtung zueinander gehalten sind, und dass in einer zweiten Position die ersten und zweiten Verriegelungselemente (15, 16) derart ausgekoppelt sind, dass das Kopplungselement und das röhrenförmige Gleitelement frei sind, relativ zueinander zu rotieren, wodurch die Ausnehmungen des Kopplungselements und die Ausnehmungen des röhrenförmigen Gleitelements in Umfangsrichtung versetzbar sind.

2. Vorrichtung nach Anspruch 1, wobei das erste Verriegelungselement (12) an einem ersten radialen Flansch (16) festgelegt ist, der sich von dem röhrenförmigen Gleitelement (8) erstreckt, und wobei das zweite Verriegelungselement (12) an einem ersten radialen Flansch (15) festgelegt ist, der sich von dem Kopplungselement (9) erstreckt.

3. Vorrichtung nach Anspruch 2, wobei in der ersten Position der erste radiale Flansch (16) des röhrenförmigen Gleitelements axial mit dem ersten radialen Flansch (15) des Kopplungselements ausgerichtet ist.

4. Vorrichtung nach Anspruch 3, wobei das röhrenförmige Gleitelement einen mit Abstand von dem ersten Flansch des röhrenförmigen Gleitelements (8) angeordneten zweiten radialen Flansch (14) aufweist, und wobei das Kopplungselement (9) einen mit Abstand von dem ersten Flansch des Kopplungselements angeordneten zweiten radialen Flansch (13) aufweist, wobei die Wälzkörper zwischen den ersten und zweiten Flanschen des röhrenförmigen Gleitelements und zwischen den ersten und zweiten Flanschen des Kopplungselements angeordnet sind, und wobei eine axial wirkende Feder (10) zwischen den Wälzkörpern und den zweiten Flanschen des röhrenförmigen Gleitelements und des Kopplungselements derart angeordnet ist, dass die Feder die ersten Flansche des röhrenförmigen Gleitelements und des Kopplungselements in eine axiale Ausrichtung vorspannt.

5. Vorrichtung nach Anspruch 4, wobei das röhrenförmige Gleitelement eine axiale Länge hat, die größer ist als eine axiale Länge des Kopplungselements, und wobei ein Abstandselement (25) zwischen dem zweiten Flansch des röhrenförmigen Gleitelements und der Feder angeordnet ist.

6. Vorrichtung nach Anspruch 2, wobei die ersten und zweiten Verriegelungselemente durch eine Serie innerer und äußerer Evolventen-Keilwellennuten (26) festgelegt sind, die an den ersten Flanschen (15, 16) des röhrenförmigen Gleitelements und des Kopplungselements ausgebildet sind.

7. Vorrichtung nach Anspruch 1, wobei in der zweiten Position das Kopplungselement (9) mit einer anderen Geschwindigkeit als das röhrenförmige Gleitelement (8) rotiert, wodurch bewirkt wird, dass sich die Wälzkörper derart gegen die Vorsprünge bewegen, dass das röhrenförmige Gleitelement zusammengezogen wird.

8. Vorrichtung nach Anspruch 1, wobei in der zweiten Position das Kopplungselement (9) mit einer anderen Geschwindigkeit als das röhrenförmige Gleitelement (8) rotiert, wodurch bewirkt wird, dass sich die Wälzkörper (11) derart gegen die Vorsprünge bewegen, dass das röhrenförmige Gleitelement ausgedehnt wird.

9. Vorrichtung nach Anspruch 1, wobei das Kopplungselement (9) durch eine Schaltgabel (6) relativ zu dem röhrenförmigen Gleitelement (8) verschoben wird.

10. Vorrichtung nach Anspruch 1, wobei das röhrenförmige Gleitelement (8) um eine Welle herum angebracht ist, und wobei das Kopplungselement an einem ersten Antriebsorgan befestigt ist, das um die Welle herum verdrehbar ist.

11. Vorrichtung nach Anspruch 1, wobei das Kopplungselement an einer Welle befestigt sein kann, und wobei das röhrenförmige Gleitelement von einem ersten Antriebsorgan ergriffen sein kann, das um die Welle herum verdrehbar ist.

12. Vorrichtung mit einen ersten Antriebsorgan (1), einer Welle (3) und einer Kupplungsvorrichtung (30) zum Koppeln des ersten Antriebsorgans mit der Welle, wobei die Kupplungsvorrichtung folgende Merkmale aufweist:
- ein im Allgemeinen zylindrisches röhrenförmiges Gleitelement (8) mit einer Reibungsfläche (19) und einer Lagerfläche, mit einem sich zwischen der Reibungsfläche und der Lagerfläche erstreckenden axialen Spalt (24), wobei die Reibungsfläche (19) entweder die Welle (3) oder das erste Antriebsorgan (1) ergreift, und wobei die Lagerfläche radiale Vorsprünge (20) aufweist, die axial ausgerichtete Ausnehmungen bilden, wobei das röhrenförmige Gleitelement (8) ein erstes Verriegelungselement (12, 15) aufweist; und
- ein im Allgemeinen zylindrisches Kopplungselement (9) mit einer Befestigungsfläche und einer Lagerfläche, wobei die Befestigungsfläche an dem jeweils anderen der Welle oder des ersten Antriebsorgans befestigt ist, und wobei die Lagerfläche radiale Vorsprünge (22) aufweist, die axial ausgerichtete Ausnehmungen (23) derart bilden, dass die Ausnehmungen des röhrenförmigen Gleitelements und die Ausnehmungen des Kopplungselements Taschen bilden, in denen Wälzkörper (11) angeordnet sind, wobei das Kopplungselement (9) ein zweites Verriegelungselement (12, 16) aufweist;
**dadurch gekennzeichnet, dass**
- das röhrenförmige Gleitelement und das Kopplungselement relativ zueinander axial derart verschiebbar sind, dass die ersten und zweiten Verriegelungselemente (15, 16) in einer ersten Position derart in Eingriff miteinander stehen, dass die Ausnehmungen des Kopplungselements und die Ausnehmungen des röhrenförmigen Gleitelements in einer umfangsmäßigen Ausrichtung zueinander gehalten sind, und dass in einer zweiten Position die ersten und zweiten Verriegelungselemente (15, 16) derart entkoppelt sind, dass das Kopplungselement und das röhrenförmige Gleitelement frei sind, relativ zueinander zu rotieren, wodurch die Ausnehmungen des Kopplungselements und die Ausnehmungen des röhrenförmigen Gleitelements in Umfangsrichtung versetzbar sind.

13. Vorrichtung nach Anspruch 12, wobei das erste Verriegelungselement (12) an einem ersten radialen Flansch (16) festgelegt ist, der sich von dem röhrenförmigen Gleitelement (8) erstreckt, und wobei das zweite Verriegelungselement (12) an einem ersten radialen Flansch (15) festgelegt ist, der sich von dem Kopplungselement (9) erstreckt.

14. Vorrichtung nach Anspruch 13, wobei in der ersten Position der erste radiale Flansch (16) des röhrenförmigen Gleitelements axial mit dem ersten radialen Flansch (15) des Kopplungselements ausgerichtet ist.

15. Vorrichtung nach Anspruch 14, wobei das röhrenförmige Gleitelement einen mit Abstand von dem ersten Flansch des röhrenförmigen Gleitelements (8) angeordneten zweiten radialen Flansch (14) aufweist, und wobei das Kopplungselement (9) einen mit Abstand von dem ersten Flansch des Kopplungselements angeordneten zweiten radialen Flansch (13) aufweist, wobei die Wälzkörper zwischen den ersten und zweiten Flanschen des röhrenförmigen Gleitelements und zwischen den ersten und zweiten Flanschen des Kopplungselements angeordnet sind, und wobei eine axial wirkende Feder (10) zwischen den Wälzkörpern und den zweiten Flanschen des röhrenförmigen Gleitelements und des Kopplungselements derart angeordnet ist, dass die Feder die ersten Flansche des röhrenförmigen Gleitelements und des Kopplungselements in eine axiale Ausrichtung vorspannt.

16. Vorrichtung nach Anspruch 15, wobei das röhrenförmige Gleitelement eine axiale Länge hat, die größer ist als eine axiale Länge des Kopplungselements, und wobei ein Abstandselement (25) zwischen dem zweiten Flansch des röhrenförmigen Gleitelements und der Feder angeordnet ist.

17. Vorrichtung nach Anspruch 13, wobei die ersten und zweiten Verriegelungselemente durch eine Serie innerer und äußerer Evolventen-Keilwellennuten (26) festgelegt sind, die an den ersten Flanschen (15, 16) des röhrenförmigen Gleitelements und des Kopplungselements ausgebildet sind.

18. Vorrichtung nach Anspruch 12, wobei das röhrenförmige Gleitelement (8) um die Welle (3) herum angeordnet ist, und wobei, wenn es sich in der zweiten Position befindet, das Kopplungselement (9) mit einer anderen Geschwindigkeit als das röhrenförmige Gleitelement (8) rotiert, wodurch bewirkt wird, dass sich die Wälzkörper (11) derart gegen die Vorsprünge bewegen, dass das röhrenförmige Gleitelement gegen die Welle zusammengezogen wird.

19. Vorrichtung nach Anspruch 12, wobei das röhrenförmige Gleitelement (8) mit dem ersten Antriebsorgan (1) in Eingriff steht, und wobei, wenn es sich in der zweiten Position befindet, das Kopplungselement (9) mit einer anderen Geschwindigkeit als das röhrenförmige Gleitelement (8) rotiert, wodurch bewirkt wird, dass sich die Wälzkörper derart gegen die Vorsprünge bewegen, dass das röhrenförmige Gleitelement in einen verriegelten Eingriff mit dem ersten Antriebsorgan ausgedehnt wird.

20. Vorrichtung nach Anspruch 12, wobei das Kopplungselement (9) durch eine Schaltgabel (6) relativ zu dem röhrenförmigen Gleitelement (8) verschoben wird.

21. Vorrichtung nach Anspruch 20, wobei sie weiterhin ein um die Welle (3) herum angeordnetes zweites Antriebsorgan (2) mit einer zweiten Kupplungsvorrichtung dazwischen aufweist, die ein zweites röhrenförmiges Gleitelement (8') und ein zweites Kopplungselement (9') aufweist, und wobei die Schaltgabel (6) zwischen einer ersten Position, in der weder das erste Antriebsorgan (1) noch das zweite Antriebsorgan (2) ergriffen ist, einer zweiten Position, in der das erste Antriebsorgan (1) ergriffen ist, und einer dritten Position, in der das zweite Antriebsorgan (2) ergriffen ist, bewegbar ist.

22. Vorrichtung nach Anspruch 12, wobei das röhrenförmige Gleitelement (8) um die Welle (3) herum angebracht ist und wobei das Kopplungselement (9) an dem ersten Antriebsorgan (1) befestigt ist.

23. Vorrichtung nach Anspruch 12, wobei das Kopplungselement (9) an der Welle (3) befestigt ist und das röhrenförmige Gleitelement (8) von dem ersten Antriebsorgan (1) ergriffen ist.

## Revendications

1. Dispositif d'embrayage (30) qui comprend :
un patin tubulaire sensiblement cylindrique (8) muni d'une surface de frottement (19) et d'une surface portante avec une fente axiale (24) s'étendant entre la surface de frottement et une surface portante, la surface portante présentant des projections radiales (20) qui forment des évidements (21) en orientation axiale, le patin tubulaire comprenant un premier élément d'interverrouillage (12, 16), et
un élément de couplage sensiblement cylindrique (9) présentant une surface de montage et une surface portante, la surface portante présentant des projections radiales (22) qui forment des évidements à orientation axiale de sorte que les évidements du patin tubulaire et les évidements (23) de l'élément de couplage forment des poches dans lesquelles sont logés des rouleaux (11), l'élément de couplage (9) comprenant un second élément d'interverrouillage (12, 15), **caractérisé en ce que**
le patin tubulaire (8) et l'élément de couplage (9) peuvent être déplacés axialement l'un par rapport à l'autre de sorte que dans une première position, les premier et second éléments d'interverrouillage (15, 16) sont en prise de sorte que les évidements de l'élément de couplage et les évidements du patin tubulaire sont maintenus en alignement circonférentiel, et dans une seconde position, les premier et second éléments d'interverrouillage (15, 16) sont désengagés de sorte que l'élément de couplage et le patin tubulaire sont libres de tourner l'un par rapport à l'autre, les évidements de l'élément de couplage et les évidements du patin tubulaire pouvant être désalignés par rapport à la circonférence.

2. Dispositif selon la revendication 1, dans lequel le premier élément d'interverrouillage (12) est défini sur une première flasque radiale (16) s'étendant à partir du patin tubulaire (8) et le second élément d'interverrouillage (12) est défini sur une première flasque radiale (15) s'étendant à partir de l'élément de couplage (9).

3. Dispositif selon la revendication 2, dans lequel dans la première position, la première flasque radiale (16) du patin tubulaire est axialement alignée sur la première flasque radiale (15) de l'élément de couplage.

4. Dispositif selon la revendication 3, dans lequel le patin tubulaire présente une seconde flasque radiale (14) espacée de la première flasque du patin tubulaire (8) et l'élément de couplage (9) présente une seconde flasque radiale (13) espacée de la première flasque de l'élément de couplage, les rouleaux étant positionnés entre les première et seconde flasques du patin tubulaire et entre les première et seconde flasques de l'élément de couplage, et dans lequel un ressort (10) à action axiale est positionné entre les rouleaux et les secondes flasques du patin tubulaire et de l'élément de couplage de manière à ce que le ressort pousse les premières flasques du patin tubulaire et de l'élément de couplage en alignement axial.

5. Dispositif selon la revendication 4, dans lequel le patin tubulaire présente une longueur axiale plus grande qu'une longueur axiale de l'élément de couplage et une pièce d'écartement (25) est positionnée entre la seconde flasque du patin tubulaire et le ressort.

6. Dispositif selon la revendication 2, dans lequel les premier et second éléments d'interverrouillage sont définis par une série de cannelures à développante (26) internes et externes formées sur les premières flasques (15, 16) du patin tubulaire et de l'élément de couplage.

7. Dispositif selon la revendication 1, dans lequel, dans la seconde position, l'élément de couplage (9) tourne à une vitesse différente du patin tubulaire (8), amenant de la sorte les rouleaux à se mouvoir contre les projections de sorte que le patin tubulaire est contracté.

8. Dispositif selon la revendication 1, dans lequel, dans la seconde position, l'élément de couplage (9) tourne à une vitesse différente du patin tubulaire (8), amenant de la sorte les rouleaux (11) à se mouvoir contre les projections de sorte que le patin tubulaire est dilaté.

9. Dispositif selon la revendication 1, dans lequel l'élément de couplage (9) est déplacé par rapport au patin tubulaire (8) par une fourchette de commande (6).

10. Dispositif selon la revendication 1, dans lequel le patin tubulaire (8) est monté autour d'un arbre et l'élément de couplage est fixé à une première roue dentée pouvant tourner autour de l'arbre.

11. Dispositif selon la revendication 1, dans lequel l'élément de couplage peut être fixé à un arbre et le patin tubulaire peut entrer en prise avec une première roue dentée pouvant tourner autour de l'arbre.

12. Dispositif comportant une première roue dentée (1), un arbre (3) et un dispositif d'embrayage (30) pour coupler ladite première roue dentée audit arbre, le dispositif d'embrayage comprenant :
un patin tubulaire sensiblement cylindrique (8) muni d'une surface de frottement (19) et d'une surface portante avec une fente axiale (24) s'étendant entre la surface de frottement et une surface portante, la surface de frottement (19) entrant en prise, soit avec l'arbre (3), soit avec la première roue dentée (1), et la surface portante présentant des projections radiales (20) qui forment des évidements à orientation axiale, le patin tubulaire (8) présentant un premier élément d'interverrouillage (12, 15), et
un élément de couplage sensiblement cylindrique (9) comportant une surface de montage et une surface portante, la surface de montage fixée à respectivement l'autre des arbre ou première roue dentée, et la surface portante présentant des projections radiales (22) qui forment des évidements (23) à orientation axiale de sorte que les évidements du patin tubulaire et les évidements de l'élément de couplage forment des poches dans lesquelles sont logés des rouleaux (11), l'élément de couplage (9) comprenant un second élément d'interverrouillage (12, 16), **caractérisé en ce que**
le patin tubulaire et l'élément de couplage peuvent être déplacés axialement l'un par rapport à l'autre de sorte que dans une première position, les premier et second éléments d'interverrouillage (15, 16) sont en prise de manière à ce que les évidements de l'élément de couplage et les évidements du patin tubulaire sont maintenus en alignement circonférentiel, et dans une seconde position, les premier et second éléments d'interverrouillage (15, 16) sont désengagés de sorte que l'élément de couplage et le patin tubulaire sont libres de tourner l'un par rapport à l'autre, les évidements de l'élément de couplage et les évidements du patin tubulaire pouvant être désalignés par rapport à la circonférence.

13. Dispositif selon la revendication 12, dans lequel le premier élément d'interverrouillage (12) est défini sur une première flasque radiale (16) s'étendant à partir du patin tubulaire (8) et le second élément d'interverrouillage (12) est défini sur une première flasque radiale (15) s'étendant à partir de l'élément de couplage (9).

14. Dispositif selon la revendication 13, dans lequel, dans la première position, la première flasque radiale (16) du patin tubulaire est axialement alignée sur la première flasque radiale (15) de l'élément de couplage.

15. Dispositif selon la revendication 14, dans lequel le patin tubulaire présente une seconde flasque radiale (14) espacée de la première flasque du patin tubulaire (8) et l'élément de couplage (9) présente une seconde flasque radiale (13) espacée de la première flasque de l'élément de couplage, les rouleaux étant positionnés entre les première et seconde flasques du patin tubulaire et entre les première et seconde flasques de l'élément de couplage, et dans lequel un ressort à action radiale (10) est positionné entre les rouleaux et les secondes flasques du patin tubulaire et de l'élément de couplage de manière à ce que le ressort pousse les premières flasques du patin tubulaire et de l'élément de couplage en alignement axial.

16. Dispositif selon la revendication 15, dans lequel le patin tubulaire présente une longueur axiale plus grande que la longueur axiale de l'élément de couplage et une pièce d'écartement (25) est positionnée entre la seconde flasque du patin tubulaire et le ressort.

17. Dispositif selon la revendication 13, dans lequel les premier et second éléments d'interverrouillage sont définis par une série de cannelures à développante (26) internes et externes formées sur les premières flasques (15, 16) du patin tubulaire et de l'élément de couplage.

18. Dispositif selon la revendication 12, dans lequel le patin tubulaire (8) est positionné autour de l'arbre (3) et lorsqu'il est dans la seconde position, l'élément de couplage (9) tourne à une vitesse différente de celle du patin tubulaire (8) amenant de la sorte les rouleaux (11) à se mouvoir contre les projections de manière à ce que le patin tubulaire est contracté contre l'arbre.

19. Dispositif selon la revendication 12, dans lequel le patin tubulaire (8) est en prise avec la première roue dentée (1) et lorsqu'il est dans la seconde position, l'élément de couplage (9) tourne à une vitesse différente de celle du patin tubulaire (8), amenant de la sorte les rouleaux à se mouvoir contre les projections de sorte que le patin tubulaire est dilaté, entrant en prise verrouillée avec la première roue dentée.

20. Dispositif selon la revendication 12, dans lequel l'élément de couplage (9) est déplacé par rapport au patin tubulaire (8) par une fourchette de commande (6).

21. Dispositif selon la revendication 20 comprenant par ailleurs une seconde roue dentée (2) positionnée autour de l'arbre (3) présentant un second dispositif d'embrayage, y compris un second patin tubulaire (8') et un second élément de couplage (9'), entre lesquels et dans lesquels la fourchette de commande (6) peut se déplacer entre une première position dans laquelle ni la première (1) ni la seconde roue dentée (2) n'est en prise, une seconde position dans laquelle la première roue dentée (1) est en prise et une troisième position dans laquelle la seconde roue dentée (2) est en prise.

22. Dispositif selon la revendication 12, dans lequel le patin tubulaire (8) est monté autour de l'arbre (3) et l'élément de couplage (9) est fixé à la première roue dentée (1).

23. Dispositif selon la revendication 12, dans lequel l'élément de couplage (9) est fixé à l'arbre (3) et le patin tubulaire (8) est en prise avec la première roue dentée (1).
